# EUROPÄISCHE PATENTANMELDUNG

(11) **EP 2 894 404 A1**
(43) Veröffentlichungstag der Anmeldung: **15.07.2015**
(21) Anmeldenummer: 15150147.5
(22) Anmeldetag: 06.01.2015
(51) Int. Cl.: F23N 3/00

(54) **Kraft-Wärme-Kopplungssystem mit umschaltbarer Luftvorwärmung**

(30) Priorität: 08.01.2014 AT 500072014
(71) Anmelder: Vaillant GmbH, 42859 Remscheid (DE)
(72) Erfinder: Pecka, Kai, 42855 Remscheid (DE)
(74) Vertreter: Popp, Carsten

(57) **Zusammenfassung**

Die Erfindung betrifft ein Kraft-Wärme-Kopplungssystem. Um sowohl eine hohe Effizienz bei der Stromerzeugung aufzuweisen als auch eine hohe thermische Leistung bei erhöhtem Wärmebedarf ohne Zusatzheizer zu liefern ist erfindungsgemäß eine umschaltbare Verbrennungsluftvorwärmung vorgesehen.

## Beschreibung

Die Erfindung betrifft ein Kraft-Wärme-Kopplungssystem. Kraft-Wärme-Kopplungssysteme werden eingesetzt, um gleichzeitig Gebäude zu beheizen und Strom zu erzeugen. Sie können aus einer Wärmekraftmaschine aufgebaut sein, die einen Generator zur Erzeugung von Strom antreibt. Die Abwärme der Wärmekraftmaschine wird für Heizzwecke verwendet. Bei der Wärmekraftmaschine kann es sich um einen Verbrennungsmotor mit externer Verbrennung, beispielsweise einen Stirlingmotor, oder um einen thermoakustischen Generator handeln. In diesen Fällen weist die Wärmekraftmaschine eine Wärmesenke auf, die von einem Brennersystem zu beheizen ist. Es sind aber auch Kraft-Wärme-Kopplungssystem mit interner Verbrennung bekannt, beispielsweise auf der Basis eines Ottomotors.

Kraft-Wärme-Kopplungssysteme werden eingesetzt, um Wohngebäude oder Gewerbebetriebe sowohl mit elektrischer Energie als auch mit Wärme zum Heizen oder zur Warmwasserbereitung zu versorgen. Je nach Zweck kann das Kraft-Wärme-Kopplungssystem entweder über den Wärmebedarf geführt werden, wobei zusätzlich Strom erzeugt wird, der selbst verbraucht und gegebenenfalls in das öffentliche Stromnetz eingespeist wird, oder über den Strombedarf geführt werden, wobei das Kraft-Wärme-Kopplungssystem die benötigte Menge an elektrischer Energie erzeugt und die dabei anfallende Wärme zum Heizen oder zur Warmwasserbereitung genutzt wird. Die zweite Variante hat den Vorteil, besonders wirtschaftlich zu sein und nutzt die Tatsache aus, dass sich Wärme leicht speichern lässt. Kraft-Wärme-Kopplungssysteme gemäß der zweiten Variante weisen daher eine meist geringe elektrische und thermische Leistung auf. Dies hat zur Folge, dass die Heizleistung an kalten Tagen nicht ausreicht. Daher muss an kalten Tagen zugeheizt werden. In der Patentanmeldung DE 10 2010 015702 A1 sind mehrere Ausführungsformen einer zusätzlichen Heizung bekannt. Dies sind aus dem dort zitierten Stand der Technik zusätzliche Spitzenlastheizkessel oder elektrische Zusatzheizungen sowie eine Erhöhung der Drehzahl des Verbrennungsmotors. Erfindungsgemäß wird in der Patentanmeldung DE 10 2010 015702 A1 vorgeschlagen, einen zusätzlichen Brenner zum Erhöhen der thermischen Energie im Abgas anzuordnen.

Die Patentanmeldung EP 1 821 044 A1 offenbart ein Kraft-Wärme-Kopplungssystem mit einer Gasturbine. Den heißen Abgasen der Gasturbine wird zunächst in einem ersten Wärmetauscher Wärme für die Vorwärmung der Verbrennungsluft entzogen. In einem nachgeschalteten zweiten Wärmetauscher wird die Restwärme für eine Heizung genutzt. Die Abwärme der Gasturbine wird genutzt, um einer Lüftungsanlagewärme zuzuführen. Im Sommer wird die vorhandene Lüftungsanlage genutzt, um die Abwärme der Gasturbine abzuführen. Dabei ist das Kraft-Wärme-Kopplungssystem so ausgelegt, dass die Gasturbine bestmöglich gekühlt wird, um einen hohen Verstromungswirkungsgrad zu erzielen. Die Patentanmeldung EP 1 821 044 A1 liefert jedoch keine Lösung auf das Problem, wie bei niedrigen Außentemperaturen der Wärmebedarf des Gebäudes gedeckt werden kann. Es wird ein Heizungssystem erwähnt, aber nicht näher erläutert.

Alle bekannten Lösungen haben den Nachteil, dass ein zusätzliches Heizgerät in Form eines Brenners oder einer elektrischen Heizung vorgesehen werden muss. Eine Erhöhung der Drehzahl der Wärmekraftmaschine würde bedeuten, dass die Netzfrequenz erhöht wird. Zudem ist die Steigerung der so erzeugbaren Wärmemenge begrenzt.

Es ist daher Aufgabe der Erfindung, ein Kraft-Wärme-Kopplungssystem bereitzustellen, das bei einer Auslegung nach dem Bedarf an elektrischer Energie dennoch dazu geeignet ist, einen Spitzenlastbedarf an Wärme ohne aufwändige zusätzlichen Brenner oder elektrische Heizmittel zu decken.

Diese Aufgabe wird erfindungsgemäß durch ein Kraft-Wärme-Kopplungssystem gemäß den Merkmalen des Anspruchs 1 gelöst.

Das erfindungsgemäße Kraft-Wärme-Kopplungssystem verfügt über einen Abgaswärmetauscher, in dem die Wärme vom Abgas auf die für die Verbrennung angesaugt Luft oder auf das Brennstoff-Luft-Gemisch übertragen. Dies führt insbesondere bei Kraft-Wärme-Kopplungsystemen mit Wärmekraftmaschinen mit externer Verbrennung zu einer höheren Effizienz, d.h. zu einer höheren abgegebenen elektrischen Leistung in Bezug auf die eingesetzte Energie und somit zu einem zugunsten der elektrischen Leistung besseren Verhältnis zwischen der elektrischen Leistung und der thermischen Leistung. Erfindungsgemäß weist die Leitung für die Luft einen Bypass auf, mit dem die Luft bei einem höheren Wärmebedarf an dem Abgaswärmetauscher vorbeigeführt werden kann. Dadurch ändert sich das Verhältnis zwischen elektrischer Leistung und thermischer Leistung zu Gunsten der thermischen Leistung. Dadurch ist es möglich, auch bei erhöhtem Wärmebedarf ein erfindungsgemäßes Kraft-Wärme-Kopplungssystem zu verwenden, ohne Zusatzheizungsmittel einzusetzen.

In einer Variante der Erfindung ist das Bypassventil ein 3-Wege-Ventil, das das Brennstoff-Luft-Gemisch abhängig vom Wärmebedarf steuerbar auf dem Abgaswärmetauscher oder den Bypass verteilt.

In einer anderen Variante der Erfindung ist das Bypassventil ein Absperrventil, mit dem der Bypass blockierbar ist.

Weitere vorteilhafte Ausgestaltungen ergeben sich durch die Merkmale der abhängigen Ansprüche.

Die Erfindung wird nun anhand der Figuren detailliert erläutert.

Es stellen dar:
Figur 1: schematisch den Aufbau eines erfindungsgemäßen Kraft-Wärme-Kopplungssystem,
Figur 2: schematisch den Aufbau einer Variante des Kraft-Wärme-Kopplungssystems aus Figur 1.

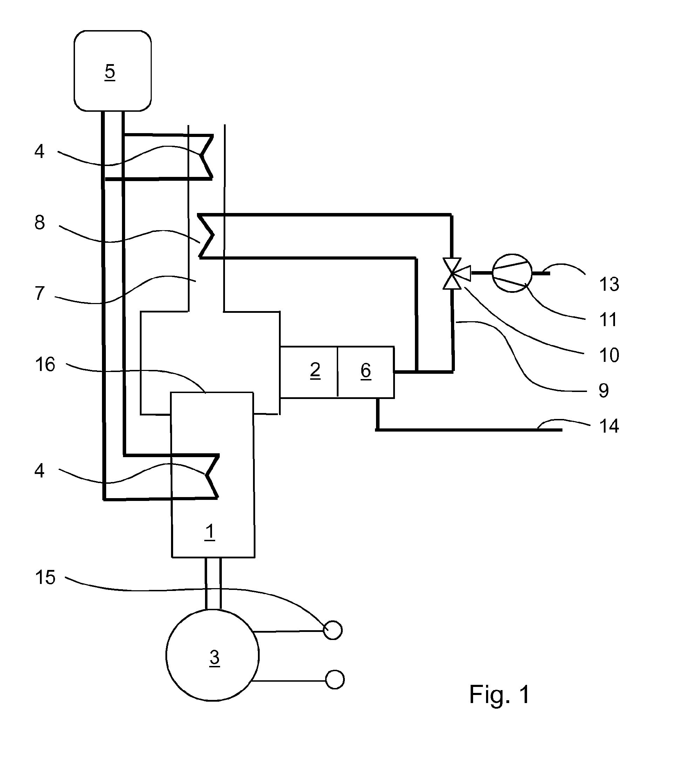

Figur 1 zeigt schematisch den Aufbau eines erfindungsgemäßen Kraft-Wärme-Kopplungssystems. Das Kraft-Wärme-Kopplungssystem umfasst eine Wärmekraftmaschine 1 und einen von der Wärmekraftmaschine 1 angetriebenen Generator 3, der Strom erzeugt, welcher über den Netzanschluss 15 entnommen werden kann. Nicht dargestellt ist ein Umrichter, der gegebenenfalls den vom Generator erzeugten Strom in Netzfrequenz und Netzspannung umwandelt. Der vom Generator 3 erzeugte Strom wird in erster Linie innerhalb eines Wohngebäudes oder eines Gewerbebetriebes verbraucht. Überschüssiger Strom kann in das öffentliche Netz eingespeist werden. Die im Kraft-Wärme-Kopplungssystem entstehende Abwärme wird über Wärmetauscher 4 abgeführt und einer Wärmesenke 5 zugeführt. Die Wärmetauscher 4 können in der Abgasleitung 7, in einem hier nicht dargestellten Kühlwasserkreislauf der Wärmekraftmaschine 1 und/oder an einer anderen geeigneten Stelle vorgesehen sein. Die Wärmesenke 5 kann ein Warmwasserspeicher sein oder ein zu beheizendes Gebäude. Die nachfolgende Beschreibung bezieht sich auf eine Wärmekraftmaschine 1 mit externer Verbrennung, beispielsweise einen Stirlingmotor oder einen Thermoakustischen Generator. Die erfindungsgemäßen Merkmale sind jedoch ebenso auf eine Wärmekraftmaschine 1 mit interner Verbrennung, beispielsweise einen Ottomotor, anwendbar.

Die Wärmekraftmaschine 1 ist mit einem Wärmetauscher 16 verbunden, der durch einen Brenner 2 beheizt wird. Die dabei in einer mit dem Wärmetauscher 16 verbundenen Brennkammer entstehenden Abgase werden über eine Abgasleitung 7 abgeführt. Ein Abgaswärmetauscher 8 kann einen Teil der Wärme nutzen, um die Verbrennungsluft vorzuwärmen. Diese wird über eine Luftzufuhr 13 zugeführt, durch ein Gebläse 12 gefördert und über einen Bypassventil 10 entweder durch den Wärmetauscher 8 oder direkt der Mischvorrichtung 6 zugeführt. In der Mischvorrichtung 6 wird die Verbrennungsluft mit einem Brennstoff, zum Beispiel einem Brenngas, einem flüssigen Brennstoff wie Heizöl oder einem festen Brennstoff wie Holzpellets gemischt und dem Brenner 2 zugeführt.

Mit dem Bypassventil 10 kann die über die Luftzufuhr 13 zugeführte Verbrennungsluft über den Wärmetauscher 8 zugeführt werden, um die Wärme des Abgases zu nutzen und so eine möglichst hohe Effizienz zu erreichen. Dieser Betriebsart ist vorgesehen, um eine hohe elektrische Leistung und eine geringe thermische Leistung zu erzeugen. Andererseits kann das Bypassventil auch so verwendet werden, dass die Luft über die Bypassleitung 9 direkt dem Brenner zugeführt wird, ohne vorgewärmt zu werden. Dadurch wird das Abgas weniger durch den Abgaswärmetauscher 8 herunter gekühlt, so dass eine größere Wärmeleistung über den Wärmetauscher 4 in der Abgasleitung 7 entnommen werden kann und der Wärmesenke zugeführt werden kann. Dieser Betriebsart wird beispielsweise bei hohem Heizwärmebedarf verwendet.

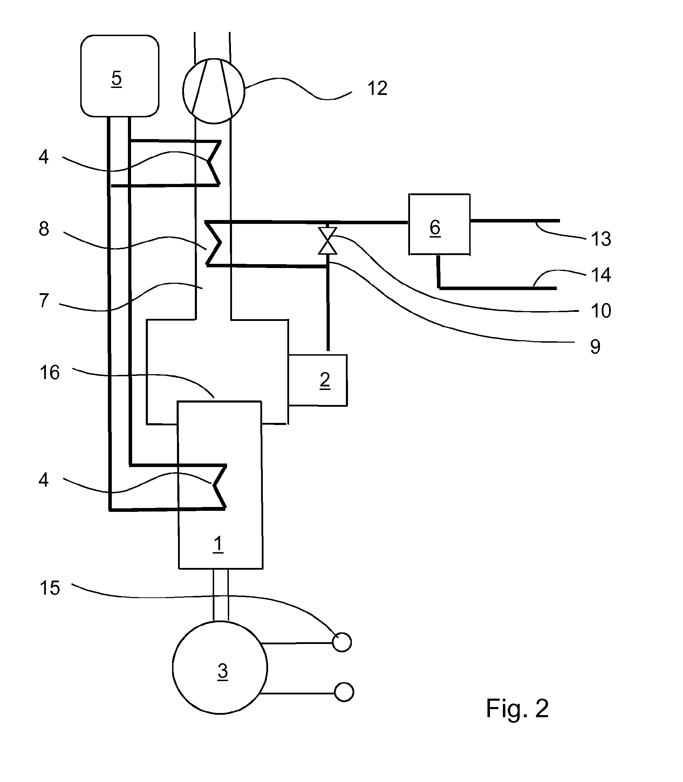

In Figur 2 ist schematisch der Aufbau einer Variante des Kraft-Wärme-Kopplungssystems aus Figur 1 dargestellt. Nachfolgend wird nur auf die Unterschiede zu Figur 1 eingegangen.

Anstelle des Gebläses 11 in der Luftzufuhr 13 ist hier ein Gebläse 12 in der Abgasleitung 7 vorgesehen. Die Position des Gebläses 11, 12 beeinflusst die Gemischbildung in der Mischvorrichtung 6. Die Mischvorrichtung 6 ist hier in Strömungsrichtung der Verbrennungsluft vor dem Abgas Wärmetauscher 8 vorgesehen. Diese Anordnung ist besonders geeignet, wenn ein Brenngas als Brennstoff vorgesehen wird. Dadurch kann zusätzlich die Wärmekapazität des Brenngases genutzt werden. Das Bypassventil 10 ist in Figur 2 als Absperrventil in der Bypassleitung 9 vorgesehen. Dies stellt eine Vereinfachung gegenüber dem 3-Wege-Ventil in Figur 1 dar und macht sich die Tatsache zunutze, dass bei geöffnetem Bypassventil 10 aufgrund des höheren Strömungswiderstand des Abgas Wärmetauschers 8 das Brenngas-Luft-Gemisch direkt durch die Abgasleitung 9 strömt. Für beide Ausführungsvarianten des Bypass Ventil 10 sind auch Ventilstellungen möglich, in dem Teilströme durch den Wärmetauscher 8 und durch die Bypassleitung 9 fließen.

### Bezugszeichenliste

- 1: Wärmekraftmaschine
- 2: Brenner
- 3: Generator
- 4: Wärmetauscher
- 5: Wärmesenke
- 6: Mischvorrichtung
- 7: Abgasleitung
- 8: Abgaswärmetauscher
- 9: Bypassleitung
- 10: Bypassventil
- 11: Gebläse
- 12: Gebläse
- 13: Luftzufuhr
- 14: Brennstoffzufuhr
- 15: Netzanschluss
- 16: Wärmetauscher der Wärmekraftmaschine

## Patentansprüche

1. Kraft-Wärme-Kopplungssystem umfassend eine Wärmekraftmaschine (1) zur Umwandlung von durch Verbrennung eines Brennstoffs in einem Brenner (2) erzeugter Wärme in mechanische Energie, ferner umfassend einen Generator (3) zum Umwandeln der durch die Wärmekraftmaschine (1) erzeugten mechanischen Energie in elektrische Energie und ferner umfassend zumindest einen Wärmetauscher (4) zur Übertragung der Verlustwärme der Wärmekraftmaschine (1) und/oder der Verlustwärme des Generators (1) und/oder der nicht durch die Wärmekraftmaschine (1) nutzbaren Wärme der Verbrennung auf eine Wärmesenke (5) zur Beheizung eines Gebäudes und/oder von Warmwasser, wobei der Brenner (2) mit einer Mischvorrichtung (6) zur Mischung von Luft und Brennstoff verbunden ist, wobei der Brenner (2) mit einer Abgasleitung (7) verbunden ist, und wobei ein Abgaswärmetauscher (8) vorgesehen ist, mit dem Wärme vom Abgas auf die Luft oder auf das Brennstoff-Luft-Gemisch übertragen werden kann, **dadurch gekennzeichnet, dass** dass eine Bypassleitung (9) vorgesehen ist, durch die die Luft oder das Brennstoff-Luft-Gemisch an dem Abgaswärmetauscher (8) vorbei führbar ist und dass ein Bypassventil (10) vorgesehen ist, mit dem die Bypassleitung (9) und/oder der Abgaswärmetauscher (8) zumindest teilweise verschließbar ist.

2. Kraft-Wärme-Kopplungssystem nach Anspruch 1, wobei das Bypassventil (10) ein 3-Wege-Ventil ist, das die Luft oder das Brennstoff-Luft-Gemisch steuerbar auf den Abgaswärmetauscher (8) oder die Bypassleitung (9) verteilt.

3. Kraft-Wärme-Kopplungssystem nach Anspruch 1, wobei das Bypassventil (10) ein Ventil ist, mit dem die Bypassleitung (9) blockierbar ist.

4. Kraft-Wärme-Kopplungssystem nach einem der Ansprüche 1 bis 3, wobei im Abgasweg stromab hinter dem Abgaswärmetauscher (8) ein Gebläse (12) vorgesehen ist.

5. Kraft-Wärme-Kopplungssystem nach einem der Ansprüche 1 bis 3, wobei im Luftweg stromauf vor dem Abgaswärmetauscher (8) ein Gebläse (11) vorgesehen ist.
